# EUROPÄISCHE PATENTSCHRIFT

(11) **EP 3 788 702 B1**
(45) Veröffentlichungstag und Bekanntmachung des Hinweises auf die Patenterteilung: **02.03.2022**
(21) Anmeldenummer: 19718568.9
(22) Anmeldetag: 16.04.2019
(51) Int. Cl.: H02K 11/21, F16D 3/76, F16D 1/068

(54) **ELEKTROMOTOR MIT EINER KUPPLUNG ZWISCHEN DER ROTORWELLE UND DER WELLE EINES WINKELSENSORS**
ELECTRIC MOTOR WITH A COUPLING BETWEEN THE ROTOR SHAFT AND THE SHAFT OF AN ANGLE SENSOR
MOTEUR ÉLECTRIQUE AVEC UN ACCOUPLEMENT ENTRE L'ARBRE DU ROTOR ET L'ARBRE D'UN CAPTEUR D'ANGLE

(30) Priorität: 03.05.2018 DE 102018003544
(43) Veröffentlichungstag der Anmeldung: 10.03.2021
(73) Patentinhaber: SEW-EURODRIVE GmbH & Co. KG, 76646 Bruchsal (DE)
(72) Erfinder: FICHTNER-PFLAUM, Gerolf, 76703 Kraichtal-Unteröwisheim (DE); RIEGER, Florian, 76227 Karlsruhe (DE)
(86) Internationale Anmeldenummer: PCT/EP2019/025104
(87) Internationale Veröffentlichungsnummer: WO 2019/210999

(56) Entgegenhaltungen:
- WO-A1-2011/088847
- CH-A- 151 751
- DE-A1- 3 740 061
- DE-A1- 10 006 223
- DE-A1-102008 028 603
- DE-A1-102011 012 632
- DE-A1-102013 002 049
- JP-A- H02 176 416
- JP-A- 2002 147 480
- US-A- 2 943 875

## Beschreibung

Die Erfindung betrifft einen Elektromotor, aufweisend eine Rotorwelle, insbesondere eine drehbar gelagerte Rotorwelle, und einen Winkelsensor.

Es ist allgemein bekannt, dass die Winkellage einer Rotorwelle mit Winkelsensoren erfassbar ist.

Aus der DE 37 40 061 A1 ist als nächstliegender Stand der Technik eine Kupplung zur Übertragung von Drehbewegungen bekannt.

Aus der JP H02 176 416 A ist eine Kupplungsstruktur bekannt.

Aus der DE 10 2011 012 632 A1 ist eine Antriebsvorrichtung mit einem Elektromotor und einem Winkelsensor bekannt.

Aus der DE 100 06 223 A1 ist ein Verfahren zur Befestigung von Drehzahlmessern bekannt.

Aus der CH 151 751 A ist eine elastische Wellenkupplung mit zwei beabstandeten, elastischen Ringen bekannt.

Aus der WO 2011/088847 A1 ist ein Verfahren zum Befestigen einer Lagerschale an einem Tragkörper mittels einer Zwischenschicht aus einem Thermoplast oder Schmelzklebstoff bekannt.

Aus der DE 10 2013 002 049 A1 ist eine Sensoranordnung bekannt.

Aus der DE 10 2008 028 603 A1 ist ein Elektromotor mit Geber bekannt.

Aus der JP 2002147480 A ist ein Kommutatormotor bekannt.

Der Erfindung liegt daher die Aufgabe zugrunde, eine Winkelerfassung einer Rotorwelle weiterzubilden, wobei eine robuste Betriebsweise erreicht werden soll.

Erfindungsgemäß wird die Aufgabe bei dem Elektromotor nach den in Anspruch 1 angegebenen Merkmalen gelöst.

Wichtige Merkmale der Erfindung bei dem Elektromotor sind, dass er eine Rotorwelle, insbesondere eine drehbar gelagerte Rotorwelle, und einen Winkelsensor aufweist,
wobei der Winkelsensor eine Sensorwelle und ein Gehäuse aufweist,
wobei die Sensorwelle mittels einer Kupplung mit der Rotorwelle drehfest verbunden ist,
wobei die Kupplung ein erstes Kupplungsteil, ein zweites Kupplungsteil und ein erstes und ein zweites, jeweils zwischen erstem und zweitem Kupplungsteil angeordnetes Ringteil aufweist,
wobei das erste Kupplungsteil drehfest mit der Rotorwelle verbunden ist und die Sensorwelle drehfest mit dem zweiten Kupplungsteil verbunden ist.

Von Vorteil ist dabei, dass ein robuster Betrieb ermöglicht ist, da Quermomentstöße und Drehmomentrucke zum Winkelsensor hin möglichst unterdrückbar sind. Somit ist eine möglichst fehlerfreie Winkelerfassung ermöglicht. Unabhängig davon, ob die Stöße oder Rucke von einer Bremse des Motors eingetragen werden oder von einer vom Motor angetriebenen Last, dämpft die Kupplung ab, wobei das Ringteil elastisch verformt wird. Bei Überlastung, also unzulässig großer Verformung, des Ringteils tritt ein Formschluss der Kupplung in Umfangsrichtung in Kraft, so dass allerdings auch Stöße oder Rucke unverzerrt übertragen werden. Insbesondere ist zwischen den beiden Ringteilen ein Zwischenraum vorsehbar, der mit Vergussmasse oder Klebstoff befüllbar ist und somit stoffschlüssig angebunden ist an das erste und zweite Kupplungsteil, so dass der Zwischenraum zusammen mit den beiden Ringteilen als insbesondere elastisches Dämpfungselement wirkt. Die Winkelstellung der Rotorwelle wird über die Kupplung mit vernachlässigbarem Schleppfehler an die Sensorwelle übertragen, solange keine unzulässig hohen Drehmomentrucke oder Querkraftstörungen auftreten. Beim Auftreten solcher Störungen dämpft die Kupplung diese dann zum Schutz des Winkelsensors ab, so dass eine korrekte Winkelerfassung im regulären Betrieb erreichbar ist.

Bei einer vorteilhaften Ausgestaltung ist das jeweilige Ringteil als Hohlteil ausgeformt, insbesondere als O-Ring. Von Vorteil ist dabei, dass das Ringteil auf das zweite Kupplungsteil aufsteckbar ist und somit zwischen erstem und zweitem Kupplungsteil einpressbar ist.

Erfindungsgemäß weist das erste Kupplungsteil eine axial gerichtete sacklochartige Ausnehmung auf, in welcher beide Ringteile aufgenommen ist, wobei das erste Kupplungsteil einen außenkonusförmigen Bereich und ein Außengewinde aufweist zur Verbindung mit der Rotorwelle, wobei das Außengewinde in ein Innengewinde der Rotorwelle eingeschraubt ist und der außenkonusförmige Bereich des ersten Kupplungsteils an einem innenkonusförmigen Bereich der Rotorwelle anliegt,
und dass das zweite Kupplungsteil einen innenkonusförmigen Bereich und ein Innengewinde, insbesondere eine axial gerichtete Gewindebohrung, aufweist, wobei in das Innengewinde ein Außengewinde der Sensorwelle eingeschraubt ist und ein außenkonusförmiger Bereich der Sensorwelle am innenkonusförmigen Bereich des zweiten Kupplungsteils anliegt. Von Vorteil ist dabei, dass mittels der konusförmigen Bereiche ein einfaches Zentrieren beim Zusammenfügen erreichbar ist und außerdem eine sehr große Haftreibung erreichbar ist, insbesondere bei einer Materialpaarung Stahl mit Stahl. Wenn also erstes und zweites Kupplungsteil ebenso wie die Rotorwelle und die Sensorwelle aus Stahl gefertigt sind, ist diese große Haftreibung, insbesondere Selbsthemmung, erreichbar. Zusätzlich wird mit den Schraubverbindungen ein Formschluss bewirkt.

Bei einer vorteilhaften Ausgestaltung ist das erste Ringteil vom zweiten Ringteil axial beabstandet,
wobei ein vom ersten Ringteil, vom zweiten Ringteil, vom ersten Kupplungsteil und vom zweiten Kupplungsteil begrenzter Zwischenraum mit Vergussmasse und/oder Klebstoff befüllt ist, insbesondere mit einem Acrylat-haltigen Material,

insbesondere wobei der Zwischenraum radial zwischen dem ersten und dem zweiten Kupplungsteil angeordnet ist. Von Vorteil ist dabei, dass axial zwischen den Ringteilen der Zwischenraum gebildet ist, weil erstes und zweites Ringteil axial beabstandet sind und das erste vom zweiten Kupplungsteil voneinander radial beabstandet ist. Auf diese Weise ist eine stoffschlüssige Anbindung der beiden Kupplungsteile an die Vergussmasse oder an den Klebstoff in einfacher Weise erreichbar. Somit ist im Normalbetrieb, also bei für den Betrieb zulässigen Drehmomentverläufen, die Winkellage der Rotorwelle auf die Sensorwelle weiterleitbar, ohne dass beachtenswerte Abweichungen auftreten. Bei Überlast oder lastseitigen Querkrafteinleitungen wird jedoch die Kupplung wirksam, insbesondere die elastische Verformbarkeit der Vergussmasse und/oder des Klebstoffs schützt die Sensorwelle vor unzulässig hohen Drehmomentrucken.

Bei einer vorteilhaften Ausgestaltung ist das jeweilige Ringteil aus Gummi oder Kunststoff ausgeführt und/oder das Ringteil als O-Ring ausgeführt. Von Vorteil ist dabei, dass der Zwischenraum sicher abdichtbar ist, so dass bei Einfüllen von Flüssigkeit in den Zwischenraum die Flüssigkeit, insbesondere Vergussmasse und/oder Klebstoff, nicht austritt. Außerdem wird zumindest ein Anteil von Drehmoment vom ersten Kupplungsteil zum zweiten Kupplungsteil auch über die Ringteile geleitet.

Bei einer vorteilhaften Ausgestaltung weist das erste Kupplungsteil eine erste durch das erste Kupplungsteil insbesondere radial durchgehende Ausnehmung aufweist, insbesondere zum Einfüllen von Vergussmasse und/oder Klebstoff in den Zwischenraum aufweist,

insbesondere wobei die erste Ausnehmung von der Umgebung des ersten Kupplungsteils her durch das erste Kupplungsteil hindurchführt und in den Zwischenraum mündet. Von Vorteil ist dabei, dass ein einfaches Einfüllen ermöglicht ist.

Bei einer vorteilhaften Ausgestaltung weist das erste Kupplungsteil eine zweite, durch das erste Kupplungsteil insbesondere radial durchgehende Ausnehmung, insbesondere zur Entlüftung beim Einfüllen, auf, welche von der ersten Ausnehmung beabstandet ist, insbesondere wobei die zweite Ausnehmung einen Bereich in Umfangsrichtung überdeckt, welcher auch von der ersten Ausnehmung in Umfangsrichtung überdeckt wird, insbesondere wobei die zweite Ausnehmung von der Umgebung des ersten Kupplungsteils her durch das erste Kupplungsteil hindurchführt und in den Zwischenraum mündet. Von Vorteil ist dabei, dass das Einfüllen der bei Herstellung noch flüssigen Vergussmasse und/oder des Klebstoffs in einfacher Weise ermöglicht ist, wobei eine Entlüftung vorsehbar ist und somit beim Einfüllen kein Gegendruck aufgebaut wird. Dadurch ist eine stoffschlüssige Anbindung der beiden Kupplungsteile erreichbar.

Bei einer vorteilhaften Ausgestaltung weist das zweite Kupplungsteil einen ersten Absatz auf, welcher das erste Ringteil axial begrenzt,

und/oder das zweite Kupplungsteil weist einen zweiten Absatz auf, welcher das zweite Ringteil axial begrenzt.

Von Vorteil ist dabei, dass die Ringteile jeweils formschlüssig axial gesichert oder zumindest begrenzt sind.

Bei einer vorteilhaften Ausgestaltung ist auf der von dem Zwischenraum und/oder von den beiden Ringteilen axial gesehen abgewandten Bereich des zweiten Kupplungsteils, insbesondere Endbereich des zweiten Kupplungsteils, ein Bereich des zweiten Kupplungsteils als Außensechskant ausgeformt. Von Vorteil ist dabei, dass für Überlast eine formschlüssige Verbindung aktivierbar ist.

Bei einer vorteilhaften Ausgestaltung weist das erste Kupplungsteil eine unrund ausgeformte, insbesondere als Innensechskant ausgeformte, Ausnehmung, insbesondere Innenwandung, auf,

insbesondere wobei der von der Ausnehmung überdeckte axiale Bereich mit dem von dem Außensechskant des zweiten Kupplungsteils
überdeckten axialen Bereich überlappt. Von Vorteil ist dabei, dass dieser Außensechskant des zweiten Kupplungsteils in Umfangsrichtung spielbehaftet formschlüssig innerhalb eines Innensechskants des ersten Kupplungsteils angeordnet ist. Somit ist ein Gegenhalten beim Schraubverbinden des zweiten Kupplungsteils mit der Sensorwelle nicht notwendig, wenn die Bremse eingefallen ist und somit die Rotorwelle gegengehalten ist.

Bei einer vorteilhaften Ausgestaltung ist der Innensechskant in Umfangsrichtung spielbehaftet formschlüssig mit dem Außensechskant des zweiten Kupplungsteils verbunden und/oder der Innensechskant ist im Eingriff mit dem Außensechskant des zweiten Kupplungsteils, wobei der größte Außendurchmesser des Außensechskants größer als der kleinste Innendurchmesser des Innensechskants ist. Von Vorteil ist dabei, dass dieser Außensechskant des zweiten Kupplungsteils in Umfangsrichtung spielbehaftet formschlüssig innerhalb eines Innensechskants des ersten Kupplungsteils angeordnet ist. Somit ist ein Gegenhalten beim Schraubverbinden des zweiten Kupplungsteils mit der Sensorwelle nicht notwendig, wenn die Bremse eingefallen ist und somit die Rotorwelle gegengehalten ist. Vonweiterem Vorteil ist dabei, dass bei Überlastung des Ringteils beziehungsweise des Zwischenraums eine in Umfangsrichtung formschlüssige Verbindung des ersten mit dem zweiten Kupplungsteil bewirkt wird.

Bei einer vorteilhaften Ausgestaltung weist der Elektromotor eine elektromagnetisch betätigbare Bremse auf,
wobei ein Bremsbelagträger mit der Rotorwelle drehfest, aber axial verschiebbar verbunden ist,
wobei in einem Magnetkörper eine mit einem elektrischen Strom beaufschlagbare Wicklung, insbesondere Ringwicklung, aufgenommen ist,
wobei zwischen Bremsbelagträger und Wicklung eine mit dem Magnetkörper drehfest verbundene, aber axial verschiebbare Ankerscheibe, insbesondere ferromagnetische Ankerscheibe, angeordnet ist,
wobei ein am Magnetkörper abgestütztes Federteil die Ankerscheibe zum Bremsbelagträger hin drückt,

insbesondere so dass bei Bestromung der Wicklung die Ankerscheibe entgegen der Federkraft zur Wicklung und/oder zum Magnetkörper hingezogen wird und bei Nichtbestromung der Wicklung die Ankerscheibe auf den Bremsbelagträger drückt, so dass der Bremsbelagträger auf eine auf der von der Ankerscheibe abgewandten Seite des Bremsbelagträgers angeordnete Bremsfläche gedrückt wird. Von Vorteil ist dabei, dass bei Stromausfall die Bremse einfällt. Somit ist bei Montage der Kupplung die Bremse eingefallen und fungiert als Mittel zum Gegenhalten beim Einschrauben des ersten Kupplungsteils in die Rotorwelle.

Bei einer vorteilhaften Ausgestaltung ist die Kupplung zwischen der Bremse und dem Winkelsensor angeordnet. Von Vorteil ist dabei, dass der Winkelsensor geschützt wird vor Querkraftstößen und/oder Drehmomentrucken.

Weitere Vorteile ergeben sich aus den Unteransprüchen.

Die Erfindung wird nun anhand von schematischen Abbildungen näher erläutert:
In der Figur 1 ist ein Querschnitt durch einen Ausschnitt eines Elektromotors mit Bremse und Winkelsensor 6 dargestellt, wobei eine Kupplung zwischen Rotorwelle 15 und Winkelsensor 6 angeordnet ist.
In der Figur 2 ist ein Querschnitt durch die Kupplung dargestellt.

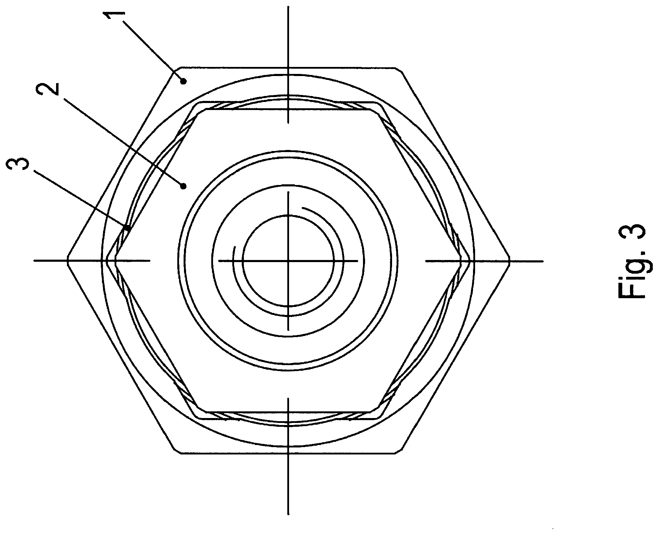

In der Figur 3 ist eine Draufsicht auf die Kupplung dargestellt.

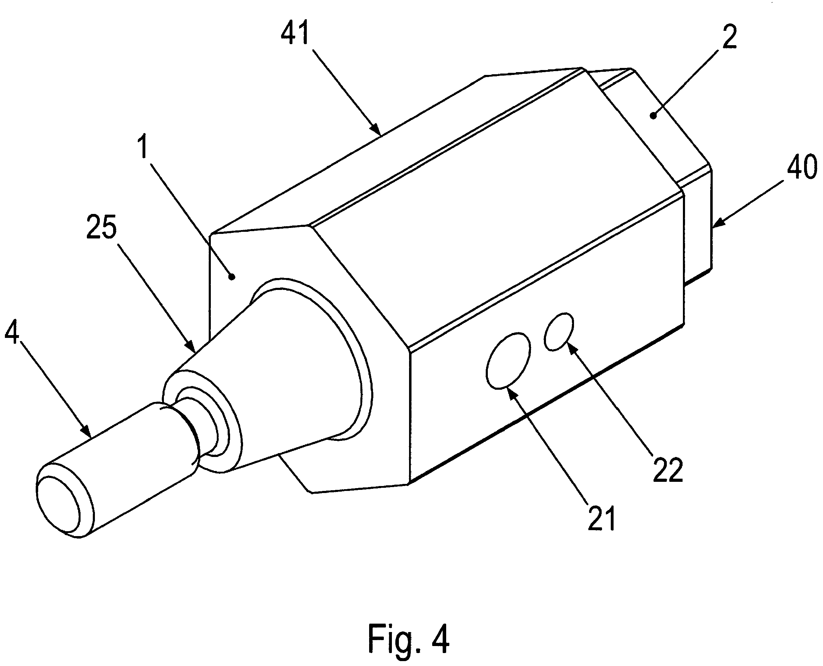

In der Figur 4 ist die Kupplung mit ersten Kupplungsteil 1 und zweitem Kupplungsteil 2 der Kupplung in Schrägansicht dargestellt.

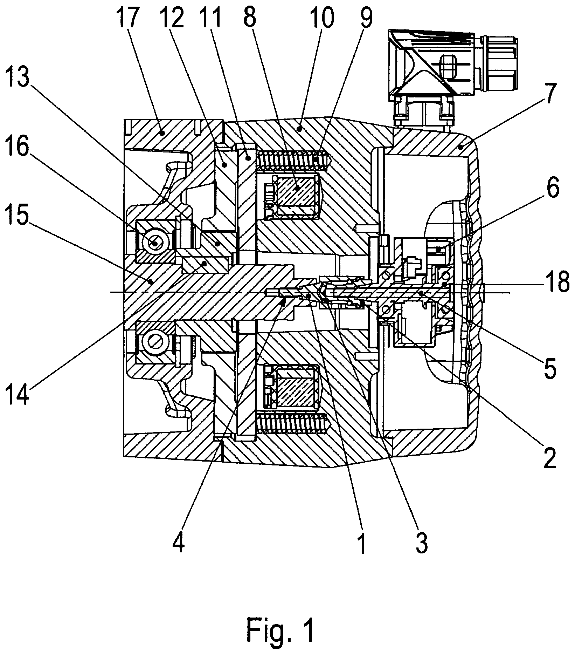

Wie in Figur 1 dargestellt, weist der Elektromotor einen Lagerflansch 17 auf, welches mit dem Stator des Elektromotors verbunden ist und ein Lager 16 aufnimmt, mittels dessen die Rotorwelle 15 drehbar gelagert ist.

Am Lagerflansch 17 ist auf dessen der Bremse zugewandten Seite eine Bremsfläche ausgebildet.

Auf die Rotorwelle 15 ist ein Mitnehmer 13 aufgesteckt, welcher drehfest mit der Rotorwelle 15 verbunden ist, insbesondere formschlüssig drehfest mit der Rotorwelle 15 verbunden ist. Der Mitnehmer 13 ist ringartig ausgeführt und mittels einer Passfederverbindung mit der Rotorwelle drehfest verbunden, insbesondere unter Verwendung einer zwischen Rotorwelle 15 und Mitnehmer 13 zwischengeordneten Passfeder 14.

Der Mitnehmer 13 weist eine Außenverzahnung auf. Insbesondere erstreckt sich diese Außenverzahnung in axialer Richtung, also parallel zur Drehachse der Rotorwelle 15.

Auf den Mitnehmer 13 ist ein Bremsbelagträger 12 aufgeschoben, welcher hohl ausgeführt ist und an seiner Innenseite eine Innenverzahnung aufweist, welche mit der Außenverzahnung im Eingriff ist. Somit ist der Bremsbelagträger 12 drehfest, aber axial verschiebbar, mit der Rotorwelle 15 verbunden.

Ein Magnetkörper 10 ist mit dem Lagerflansch drehfest verbunden, insbesondere schraubverbunden. Der Magnetkörper weist eine ringförmige umlaufende Ausnehmung auf, in welcher eine elektrisch bestrombare Wicklung 8 aufgenommen ist.

Die Wicklung 8 ist als Ringwicklung ausgeführt, wobei die Ringachse die Drehachse der Rotorwelle 15 ist.

Eine Ankerscheibe 11 ist drehfest aber axial verschiebbar mit dem Magnetkörper 10 verbunden. Ein am Magnetkörper 10 abgestütztes Federteil 9 drückt auf die Ankerscheibe1 1, so dass bei Bestromung der Wicklung die Ankerscheibe 11 die von dem Federteil 9 erzeugte Federkraft überwindend zum Magnetkörper 10, insbesondere zur Wicklung 8 hingezogen wird, so dass die Bremse gelüftet wird.

Bei Nicht-Bestromung der Wicklung 9 drückt das Federteil 9 die Ankerscheibe 11 zum Bremsbelagträger 12 hin, so dass dieser auf die am Lagerflansch 17 ausgebildete Bremsfläche gedrückt wird. Somit wird dann der axial beidseitig mit Bremsbelägen versehene Bremsbelagträger 12 zwischen Ankerscheibe 11 und Bremsfläche in Reibkontakt gebracht, so dass die Bremse also bei Nichtbestromung einfällt.

Beim Lüften und auch beim Einfallen der Bremse wird ein Drehmomentruck in die Rotorwelle 15 eingetragen. Aber auch lastseitig ist eine Belastung, wie Drehmomentruck und/oder Quermoment, eintragbar.

Um einem Winkelsensor 6 die Erfassung der Winkellage der Rotorwelle 15 möglichst ungestört zu überlassen, ist daher erfindungsgemäß zwischen Rotorwelle 15 und dem Sensor 6 eine Kupplung angeordnet.

Hierbei weist die Kupplung ein erstes Kupplungsteil 1, das drehfest mit der Rotorwelle 15 verbunden ist, und ein zweites Kupplungsteil 2, das drehfest mit dem Rotor des Sensors verbunden ist, auf.

Zwischen dem ersten und dem zweiten Kupplungsteil 1, 2 ist ein Ringteil 3 angeordnet. Das Ringteil 3 ist vorzugsweise aus einem Elastomer, insbesondere aus Gummi oder aus einem Kunststoff, ausgeführt.

Das erste Kupplungsteil 1 weist an seinem der Rotorwelle 15 zugewandten axialen Endbereich ein Außengewinde 4 auf, mit welchem das erste Kupplungsteil 1 in eine in die Rotorwelle 15 zentrisch eingebrachte, axial gerichtete Gewindebohrung eingeschraubt ist. Außerdem weist das erste Kupplungsteil 1 einen außenkonusförmigen Bereich 25 auf, welcher an einem mittig in der Rotorwelle 15 ausgeformten innenkonusförmigen Bereich anliegt. Somit ist eine in Umfangsrichtung selbsthemmende, insbesondere kraftschlüssige, Verbindung ausgeführt.

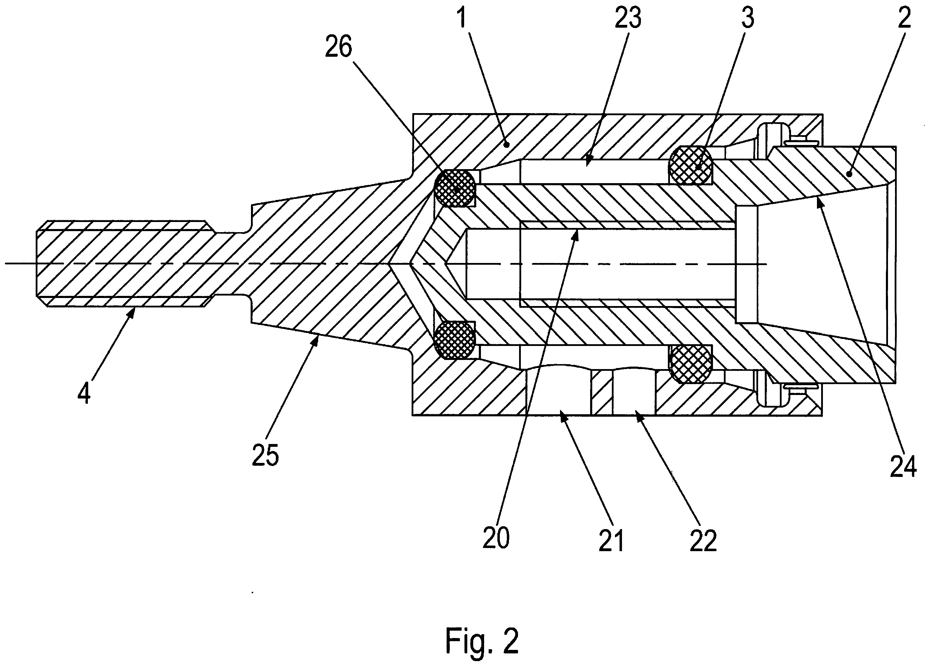

Wie in Figur 2 gezeigt, weist das erste Kupplungsteil 1 eine Ausnehmung auf, insbesondere eine sacklochartige, zum Sensor 6 hin mündende Ausnehmung auf, in welche das Ringteil 3 und das weitere Ringteil 26 eingeführt und aufgenommen ist. Die Ausnehmung kann auch unrund ausgeführt sein, insbesondere polygonförmig.

Das Ringteil 3 und das Ringteil 26 sind jeweils ringartig ausgeführt, insbesondere also O-Ring. Es weist daher eine axial durchgehende Ausnehmung, also die Ringöffnung, auf, durch welche das zweite Kupplungsteil 2 durchgesteckt ist.

Das Ringteil 3 und das Ringteil 26 sind axial voneinander beabstandet, so dass ein von den beiden Ringteilen 3, 26 axial begrenzter Zwischenraum 23 ausgebildet ist, welche radial außen vom ersten Kupplungsteil 1 und radial innen vom zweiten Kupplungsteil 2 begrenzt ist. Dieser Zwischenraum 23 ist mit Klebstoff befüllt. Das Einfüllen des Klebstoffes erfolgt durch eine durch das erste Kupplungsteil 1 von der Umgebung her radial hindurchgehende, in den Zwischenraum 23 mündende Ausnehmung 21. Zur Entlüftung ist eine weitere von der Umgebung her radial hindurchgehende, in den Zwischenraum 23 mündende Ausnehmung 21 im ersten Kupplungsteil 1 vorgesehen.

Die Ausnehmung 21 und 22 sind axial zwischen den beiden Ringteilen 3, 26 angeordnet, also in dem vom Zwischenraum 23 überdeckten axialen Bereich.

Auf diese Weise ist das erste Kupplungsteil 1 mit dem zweiten Kupplungsteil 2 mittels Klebstoff stoffschlüssig verbunden. Der ausgehärtete Klebstoff ist auch bei hohen Temperaturen beständig. Statt des Klebstoffs ist auch eine Vergussmasse aus einem Acrylat verwendbar, das ebenfalls bei hohen Temperaturen beständig ist, also bis etwa 300°C.

Der ausgehärtete Klebstoff oder die ausgehärtete Vergussmasse weisen eine höher Elastizität auf als Stahl. Somit wird ein vom ersten Kupplungsteil 1 zum zweiten Kupplungsteil durchgeleiteter Drehmomentruck oder Quermomentstoß abgedämpft.

Der am ersten Kupplungsteil 1 ausgeformte Außenkonus 25 ist axial zwischen der Außengewinde 4 und dem Zwischenraum 23 angeordnet und liegt an einem entsprechend an der Rotorwelle ausgeformten Innenkonus an, insbesondere wobei wiederum Selbsthemmung durch die Materialpaarung Stahl - Stahl erreichbar ist.

Der am zweiten Kupplungsteil 2 ausgeformte Innenkonus 24 liegt an einem entsprechend ausgeformten Außenkonus der Sensorwelle 18 an, insbesondere wobei auch hier wiederum Selbsthemmung durch die Materialpaarung Stahl - Stahl erreichbar ist.

An ihrem der Rotorwelle 15 zugewandten Endbereich der Sensorwelle 18 weist die Sensorwelle 18 ein Außengewinde auf, das in ein Innengewinde 20 des zweiten Kupplungsteils eingeschraubt ist.

Das Ringteil 3 und das Ringteil 26 ist jeweils elastisch verformt, so dass auch eine kraftschlüssige Verbindung zwischen Ringteil 3 und erstem Kupplungsteil 1 vorhanden ist.

Die beiden Ringteile 3 und 26 dichten den Zwischenraum 23 ab, so dass beim Eingießen der Vergussmasse oder des Klebstoffs keine Leckage in axialer Richtung oder entgegen der axialen Richtung auftritt.

Das erste Kupplungsteil 1 weist in dem vom Zwischenraum 23 überdeckten axialen Bereich an seiner Außenoberfläche eine sechskantförmige Kontur auf, so dass ein Drehbewegen des ersten Kupplungsteils 1 mit einem Maulschlüssel ermöglicht ist.

An dem dem Sensor 6 zugewandten axialen Endbereich des ersten Kupplungsteils 1 ist ein Innensechskant ausgeformt, wobei das zweite Kupplungsteil 2 in dem vom Innensechskant überdeckten axialen Bereich außensechskantig geformt ist. Dabei ist der größte Außendurchmesser der außensechskantigen Form größer als der kleinste lichte Durchmesser des Innensechskants. Auf diese Weise ist ein spielbehafteter Formschluss erreicht.

Das erste Kupplungsteil 1 weist also in dem vom Zwischenraum 23 überdeckten axialen Bereich den unrunden Oberflächenbereich auf, insbesondere einen polygonalen, insbesondere außensechskantförmigen, Oberflächenbereich 41 auf. Somit ist ein Gegenhalten mit einem Werkzeug ermöglicht.

Die Erfindung bewirkt eine vorteilhafte Montage. Hierzu wird nämlich zuerst die Kupplung, also das erste Kupplungsteil 1 mit der Rotorwelle 15 verbunden, indem ein Außengewinde 4 des ersten Kupplungsteils 1 in eine mittig in der Rotorwelle 15 angeordnete Gewindebohrung eingeschraubt wird. Hierzu ist ein Außensechskantbereich 41 am ersten Kupplungsteil 1 ausgeformt, an welchem ein Werkzeug, wie Maulschlüssel, ansetzbar ist und somit das erste Kupplungsteil 1 schraubverbindbar mit der Rotorwelle 15 ist. Dabei ist bei eingefallener Bremse kein Gegenhalten an der Rotorwelle 1 notwendig.

Nach Verbinden der Kupplung mit der Rotorwelle 15 wird der drehbare Teil des Sensors 6, insbesondere also Sensorwelle 18, verbunden. Hierzu wird die Sensorwelle 18 in das zweite Kupplungsteil 2 eingesteckt, so dass die konusförmigen Bereiche der Sensorwelle 18 und des zweiten Kupplungsteils 2 aneinander anliegen. Danach wird eine Schraube 5 durch die hohle Sensorwelle 18 hindurch mit ihrem Gewindebereich in das zweite Kupplungsteil 2, insbesondere in das Innengewinde 20 des zweiten Kupplungsteils 2, eingeschraubt.

Hierbei ist wiederum kein Gegenhalten notwendig, da der Formschluss zwischen dem Außensechskantbereich 40 des zweiten Kupplungsteils 2 und dem den Zwischenraum 23 zumindest teilweise begrenzenden Innensechskantbereich des ersten Kupplungsteils 1 zum Tragen kommt, wenn die Ringteile 3, 26 und Vergussmasse und/oder Klebstoff elastisch entsprechend weit ausgelenkt werden. Auf diese Weise genügt das durch die eingefallene Bremse erzeugte Gegenhalten.

Das Ringteil 3 und das Ringteil 26 sind auf das zweite Kupplungsteil 2 aufgeschoben und dabei elastisch verformt, so dass sie kraftschlüssig gehalten sind. Außerdem liegt das Ringteil 3 an einem ersten Absatz des zweiten Kupplungsteils an und das Ringteil 26 an einem zweiten Absatz des zweiten Kupplungsteils 2 an. Dabei ist der am ersten Kupplungsteil 1 ausgeformte Innensechskant bei Überlastung mit dem Außensechskantbereich 40 des zweiten Kupplungsteils 2 in Umfangsrichtung formschlüssig im Eingriff.

Der von dem Außensechskant 40 des zweiten Kupplungsteils 2 überdeckte axiale Bereich überlappt mit dem vom Innensechskant des ersten Kupplungsteils 1 überdeckten axialen Bereich.

Der vom hohlen Bereich des ersten Kupplungsteils 1 überdeckte axiale Bereich umfasst den vom Ringteil 3 und den vom Ringteil 26 überdeckten axialen Bereich.

Das Ringteil 3 dichtet den Zwischenraum 23 zwischen dem ersten und zweiten Kupplungsteil 1, 2 ab.

Das Innengewinde 20 ist entsprechend zum Außengewinde 4 ausgeführt, insbesondere wäre also schraubverbindbar mit dem Außengewinde 4. Somit ist das Außengewinde der Sensorwelle gleichartig zum Außengewinde 4 ausgebildet, so dass die Sensorwelle 18 statt des ersten Kupplungsteils 1 in die Rotorwelle 15 einschraubbar wäre.

Der am ersten Kupplungsteil 1 ausgeformte Außenkonus 25 weist denselben Konuswinkel auf wie auch der am zweiten Kupplungsteil 2 ausgeformte Innenkonus 24.

Der Außenkonus 25 ist axial zwischen der Außengewinde 4 und Außensechskantbereich 41 des ersten Kupplungsteils 1 angeordnet.

Der Innenkonus 24 ist auf der von der Rotorwelle 15 axial abgewandten Seite des Innengewindes 20 am zweiten Kupplungsteil 2 ausgeformt.

Da das Ringteil 3 an einem am zweiten Kupplungsteil 2 ausgeformten Absatz anliegt, ist es durch diesen Absatz in axialer Richtung begrenzt. Entgegen der axialen Richtung ist es durch das erste Kupplungsteil 1 begrenzt. Ebenso ist das Ringsteil 26 an dem zweiten Absatz des zweiten Kupplungsteils 2 anliegend axial begrenzt.

Bei der Herstellung wird das Ringteil 3 und das Ringteil 26 auf das zweite Kupplungsteil 2 aufgepresst und danach wird das erste Kupplungsteil 1 über das Ringteil 3 und das Ringteil 26 gestülpt und aufgepresst.

Auf diese Weise ist somit eine spielfreie Drehmomentdurchleitung ermöglicht.

Das Gehäuse des Sensors 6 ist mit einer Lüfterhaube verbunden, insbesondere zur Drehmomentabstützung. Die Lüfterhaube 7 ist mit dem Magnetkörper 10 und/oder dem Lagerflansch 17 direkt oder indirekt verbunden.

### Bezugszeichenliste

- 1: erstes Kupplungsteil
- 2: zweites Kupplungsteil
- 3: Ringteil
- 4: Außengewinde
- 5: Schraube
- 6: Winkelsensor
- 7: Lüfterhaube
- 8: Wicklung
- 9: Federteil
- 10: Magnetkörper
- 11: Ankerscheibe
- 12: Bremsbelagträger
- 13: Mitnehmer mit Außenverzahnung
- 14: Passfeder
- 15: Rotorwelle
- 16: Lager
- 17: Lagerflansch
- 18: Sensorwelle
- 20: Innengewinde
- 21: durchgehende erste Ausnehmung
- 22: durchgehende zweite Ausnehmung
- 23: Zwischenraum
- 24: Innenkonus
- 25: Außenkonus
- 26: Ringteil
- 40: Außensechskant des zweiten Kupplungsteils 2
- 41: Außensechskant des ersten Kupplungsteils 1

## Patentansprüche

1. Elektromotor,
aufweisend eine Rotorwelle (15), insbesondere eine drehbar gelagerte Rotorwelle (15), und einen Winkelsensor (6),
wobei der Winkelsensor (6) eine Sensorwelle (18) und ein Gehäuse aufweist,
wobei die Sensorwelle (18) mittels einer Kupplung mit der Rotorwelle (15) drehfest verbunden ist,
wobei die Kupplung ein erstes Kupplungsteil (1), zweites Kupplungsteil (2) und ein erstes und
ein zweites, jeweils zwischen erstem und zweitem Kupplungsteil (1, 2) angeordnetes Ringteil (3, 26) aufweist,
wobei das erste Kupplungsteil (1) drehfest mit der Rotorwelle (15) verbunden ist und die Sensorwelle (18) drehfest mit dem zweiten Kupplungsteil (2) verbunden ist,
wobei das erste Kupplungsteil (1) eine axial gerichtete sacklochartige Ausnehmung aufweist, in welcher beide Ringteile (3, 26) aufgenommen sind, **dadurch gekennzeichnet, dass** das erste Kupplungsteil (1) einen außenkonusförmigen Bereich (25) und ein Außengewinde (4) aufweist zur Verbindung mit der Rotorwelle (15), wobei das Außengewinde (4) in ein Innengewinde der Rotorwelle (15) eingeschraubt ist und der außenkonusförmige Bereich (25) des ersten Kupplungsteils (1) an einem innenkonusförmigen Bereich der Rotorwelle (15) anliegt,
und dass das zweite Kupplungsteil (2) einen innenkonusförmigen Bereich (24) und ein Innengewinde (20), insbesondere eine axial gerichtete Gewindebohrung, aufweist, wobei in das Innengewinde (20) ein Außengewinde der Sensorwelle (18) eingeschraubt ist und ein außenkonusförmiger Bereich der Sensorwelle (18) am innenkonusförmigen Bereich (24) des zweiten Kupplungsteils (2) anliegt.

2. Elektromotor nach Anspruch 1,
**dadurch gekennzeichnet, dass**
das erste Ringteil (3) vom zweiten Ringteil (26) axial beabstandet ist,
wobei ein vom ersten Ringteil (3), vomzweiten Ringteil (26), vom ersten Kupplungsteil (1) und vom zweiten Kupplungsteil (2) begrenzter Zwischenraum (23) mit Vergussmasse und/oder Klebstoff befüllt ist, insbesondere mit einem Acrylat-haltigen Material,
insbesondere wobei der Zwischenraum (23) radial zwischen dem ersten und dem zweiten Kupplungsteil (1, 2) angeordnet ist.

3. Elektromotor nach mindestens einem der vorangegangenen Ansprüche, **dadurch gekennzeichnet, dass** das jeweilige Ringteil (3, 26) aus Gummi oder Kunststoff ausgeführt ist und/oder das Ringteil (3, 26) als O-Ring ausgeführt ist.

4. Elektromotor nach mindestens einem der vorangegangenen Ansprüche,
**dadurch gekennzeichnet, dass** das erste Kupplungsteil (1) eine erste durch das erste Kupplungsteil (1) insbesondere radial durchgehende Ausnehmung (21), insbesondere zum Einfüllen von Vergussmasse und/oder Klebstoff in den Zwischenraum (23), aufweist,
insbesondere wobei die erste Ausnehmung (21) von der Umgebung des ersten Kupplungsteils (1)
her durch das erste Kupplungsteil (1) hindurchführt und in den Zwischenraum (23) mündet.

5. Elektromotor nach Anspruch 4,
**dadurch gekennzeichnet, dass**
das erste Kupplungsteil (1) eine zweite durch das erste Kupplungsteil (1) insbesondere radial durchgehende Ausnehmung (22) insbesondere zur Entlüftung beim Einfüllen aufweist, welche von der ersten Ausnehmung (21) beabstandet ist, insbesondere wobei die zweite Ausnehmung (22) einen Bereich in Umfangsrichtung überdeckt, welcher auch von der ersten Ausnehmung (21) in Umfangsrichtung überdeckt wird,
insbesondere wobei die zweite Ausnehmung (22) von der Umgebung des ersten Kupplungsteils (1) her durch das erste Kupplungsteil (1) hindurchführt und in den Zwischenraum (23) mündet.

6. Elektromotor nach mindestens einem der vorangegangenen Ansprüche,
**dadurch gekennzeichnet, dass** das zweite Kupplungsteil (2) einen ersten Absatz aufweist, welcher das erste Ringteil (3) axial begrenzt,
und/oder dass
das zweite Kupplungsteil (2) einen zweiten Absatz aufweist, welcher das zweite Ringteil (26) axia| begrenzt.

7. Elektromotor nach mindestens einem der vorangegangenen Ansprüche,
**dadurch gekennzeichnet, dass**
auf der von dem Zwischenraum (23) und/oder von den beiden Ringteilen (3, 26) axial gesehen abgewandten Bereich des zweiten Kupplungsteils (2), insbesondere Endbereich des zweiten Kupplungsteils (2), ein Bereich des zweiten Kupplungsteils (2) als Außensechskant (40) ausgeformt ist.

8. Elektromotor nach Anspruch 7,
**dadurch gekennzeichnet, dass**
das erste Kupplungsteil (1) eine unrund ausgeformte, insbesondere als Innensechskant ausgeformte, Ausnehmung, insbesondere Innenwandung, aufweist, insbesondere wobei der von der Ausnehmung überdeckte axiale Bereich mit dem von dem
Außensechskant (40) des zweiten Kupplungsteils (2) überdeckten axialen Bereich überlappt.

9. Elektromotor nach Anspruch 8,
**dadurch gekennzeichnet, dass**
der Innensechskant in Umfangsrichtung spielbehaftet formschlüssig mit dem Außensechskant (40) des zweiten Kupplungsteils (2) verbunden ist, und/oder der Innensechskant im Eingriff ist mit dem Außensechskant (40) des zweiten Kupplungsteils (2),
wobei der größte Außendurchmesser des Außensechskants (40) des zweiten Kupplungsteils (2) größer als der kleinste Innendurchmesser des Innensechskants ist.

10. Elektromotor nach mindestens einem der vorangegangenen Ansprüche,
**dadurch gekennzeichnet, dass**
der Elektromotor eine elektromagnetisch betätigbare Bremse aufweist,
wobei ein Bremsbelagträger (12) mit der Rotorwelle (15) drehfest, aber axial verschiebbar verbunden ist,
wobei in einem Magnetkörper (10) eine mit einem elektrischen Strom beaufschlagbare Wicklung (8), insbesondere Ringwicklung, aufgenommen ist,
wobei zwischen Bremsbelagträger (12) und Wicklung (8) eine mit dem Magnetkörper (10) drehfest verbundene, aber axial verschiebbare Ankerscheibe (11), insbesondere ferromagnetische Ankerscheibe, angeordnet ist,
wobei ein am Magnetkörper (10) abgestütztes Federteil (9) die Ankerscheibe (11) zum Bremsbelagträger (12) hin drückt,
insbesondere so dass bei Bestromung der Wicklung (8) die Ankerscheibe (11) entgegen der
Federkraft zur Wicklung (8) und/oder zum Magnetkörper (10) hingezogen wird und bei Nichtbestromung der Wicklung (8) die Ankerscheibe (11) auf den Bremsbelagträger (12) drückt, so dass der Bremsbelagträger (12) auf eine auf der von der Ankerscheibe (11) abgewandten Seite des Bremsbelagträgers (12) angeordnete Bremsfläche gedrückt wird.

11. Elektromotor nach mindestens einem der vorangegangenen Ansprüche,
**dadurch gekennzeichnet, dass**
die Kupplung zwischen der Bremse und dem Winkelsensor (6) angeordnet ist.

## Claims

1. Electric motor
comprising a rotor shaft (15), in particular a rotatably mounted rotor shaft (15), and an angle sensor(6),
the angle sensor (6) comprising a sensor shaft (18) and a housing,
the sensor shaft (18) being connected to the rotor shaft (15) for conjoint rotation by means of a coupling,
the coupling comprising a first coupling part (1), a second coupling part (2) and a first and a second annular part (3, 26) each arranged between the first and the second coupling part (1, 2),
the first coupling part (1) being connected to the rotor shaft (15) for conjoint rotation and the sensor shaft (18) being connected to the second coupling part (2) for conjoint rotation,
the first coupling part (1) comprising an axially oriented blind-hole-like cut-out in which the two annular parts (3, 26) are received,
**characterised in that**
the first coupling part (1) comprises an external-cone-like region (25) and an external thread (4) for connecting to the rotor shaft (15), the external thread (4) being screwed into an internal thread of the rotor shaft (15), and the external-cone-like region (25) of the first coupling part (1) abutting an internal-cone-like region of the rotor shaft (15),
and **in that** the second coupling part (2) comprises an internal-cone-like region (24) and an internal thread (20), in particular an axially oriented threaded hole, an external thread of the sensor shaft (18) being screwed into the internal thread (20), and an external-cone-like region of the sensor shaft (18) abutting the internal-cone-like region (24) of the second coupling part (2).

2. Electric motor according to claim 1,
**characterised in that**
the first annular part (3) is axially spaced apart from the second annular part (26),
a gap (23), which is delimited by the first annular part (3), the second annular part (26), the first coupling part (1) and the second coupling part (2), being filled with casting compound and/or adhesive, in particular with an acrylate-containing material,
the gap (23) in particular being arranged radially between the first and the second coupling part (1, 2).

3. Electric motor according to at least one of the preceding claims,
**characterised in that**
each annular part (3, 26) is made of rubber or plastics material and/or the annular part (3, 26) is configured as an O-ring.

4. Electric motor according to at least one of the preceding claims,
**characterised in that**
the first coupling part (1) comprises a first cut-out (21) extending, in particular radially, through the first coupling part (1), in particular for filling casting compound and/or adhesive into the gap (23),
the first cut-out (21) in particular passing through the first coupling part (1) from the surroundings of the first coupling part (1) and opening into the gap (23).

5. Electric motor according to claim 4,
**characterised in that**
the first coupling part (1) comprises a second cut-out (22) which extends, in particular radially, through the first coupling part (1), in particular for ventilation during filling, and which is spaced apart from the first cut-out (21), the second cut-out (22) in particular covering a region in the circumferential direction that is also covered by the first cut-out (21) in the circumferential direction,
the second cut-out (22) in particular passing through the first coupling part (1) from the surroundings of the first coupling part (1) and opening into the gap (23).

6. Electric motor according to at least one of the preceding claims,
**characterised in that**
the second coupling part (2) comprises a first shoulder, which axially delimits the first annular part (3),
and/or **in that**
the second coupling part (2) comprises a second shoulder, which axially delimits the second annular part (26).

7. Electric motor according to at least one of the preceding claims,
**characterised in that**
on the region of the second coupling part (2) facing away from the gap (23) and/or from the two annular parts (3, 26) when viewed axially, in particular the end region of the second coupling part (2), a region of the second coupling part (2) is moulded as a hexagon head (40).

8. Electric motor according to claim 7,
**characterised in that**
the first coupling part (1) comprises a cut-out, in particular an internal wall, that is moulded in a non-circular manner, in particular moulded as a hex socket,
the axial region covered by the cut-out in particular overlapping the axial region covered by the hexagon head (40) of the second coupling part (2).

9. Electric motor according to claim 8,
**characterised in that**
the hex socket is form-fittingly connected to the hexagon head (40) of the second coupling part (2) with play in the circumferential direction, and/or the hex socket is engaged with the hexagon head (40) of the second coupling part (2),
the largest external diameter of the hexagon head (40) of the second coupling part (2) being greater than the smallest internal diameter of the hex socket.

10. Electric motor according to at least one of the preceding claims,
**characterised in that**
the electric motor comprises an electromagnetically operable brake,
a brake lining carrier (12) being connected to the rotor shaft (15) for conjoint rotation but so as to be axially displaceable,
a winding (8), in particular an annular winding, to which an electrical current can be applied being received in a magnetic member (10),
an armature disc (11), in particular a ferromagnetic armature disc, that is connected to the magnetic member (10) for conjoint rotation but is axially displaceable being arranged between the brake lining carrier (12) and the winding (8),
a spring part (9) supported on the magnetic member (10) pushing the armature disc (11) towards the brake lining carrier (12),
in particular such that when the winding (8) is energised, the armature disc (11) is pulled towards the winding (8) and/or towards the magnetic member (10) counter to the spring force, and when the winding (8) is not energised, the armature disc (11) pushes against the brake lining carrier (12) such that the brake lining carrier (12) is pushed onto a braking surface arranged on the side of the brake lining carrier (12) facing away from the armature disc (11).

11. Electric motor according to at least one of the preceding claims,
**characterised in that**
the coupling is arranged between the brake and the angle senor (6).

## Revendications

1. Moteur électrique,
présentant un arbre de rotor (15), en particulier un arbre de rotor (15) monté de manière rotative, et un capteur d'angle (6),
dans lequel le capteur d'angle (6) présente un arbre de capteur (18) et un boîtier, dans lequel l'arbre de capteur (18) est relié à l'arbre de rotor (15) de manière solidaire en rotation au moyen d'un accouplement,
dans lequel l'accouplement présente une première partie d'accouplement (1), une deuxième partie d'accouplement (2) et une première et une deuxième partie annulaire (3, 26) disposées respectivement entre la première et la deuxième partie d'accouplement (1, 2),
dans lequel la première partie d'accouplement (1) est reliée de manière solidaire en rotation à l'arbre de rotor (15) et l'arbre de capteur (18) est relié de manière solidaire en rotation à la deuxième partie d'accouplement (2),
dans lequel la première partie d'accouplement (1) présente un évidement de type trou borgne orienté axialement dans lequel les deux parties annulaires (3, 26) sont reçues,
**caractérisé en ce que**
la première partie d'accouplement (1) présente une zone en forme de cône extérieur (25) et un filetage extérieur (4) pour la liaison à l'arbre de rotor (15), dans lequel le filetage extérieur (4) est vissé dans un filetage intérieur de l'arbre de rotor (15) et la zone en forme de cône extérieur (25) de la première partie d'accouplement (1) vient en appui contre une zone en forme de cône intérieur de l'arbre de rotor (15),
et que la deuxième partie d'accouplement (2) présente une zone en forme de cône intérieur (24) et un filetage intérieur (20), en particulier un alésage fileté orienté axialement, dans lequel un filetage extérieur de l'arbre de capteur (18) est vissé dans le filetage intérieur (20) et une zone en forme de cône extérieur de l'arbre de capteur (18) vient en appui contre la zone en forme de cône intérieur (24) de la deuxième partie d'accouplement (2).

2. Moteur électrique selon la revendication 1,
**caractérisé en ce que**
la première partie annulaire (3) est espacée axialement de la deuxième partie annulaire (26),
dans lequel un espace intermédiaire (23) délimité par la première partie annulaire (3), la deuxième partie annulaire (26), la première partie d'accouplement (1) et la deuxième partie d'accouplement (2) est rempli d'une masse de scellement et/ou d'un adhésif, en particulier d'un matériau contenant de l'acrylate,
en particulier dans lequel l'espace intermédiaire (23) est disposé radialement entre la première et la deuxième partie d'accouplement (1, 2).

3. Moteur électrique selon au moins l'une des revendications précédentes, **caractérisé en ce que**
la partie annulaire respective (3, 26) est réalisée en caoutchouc ou en matière plastique et/ou que la partie annulaire (3, 26) est réalisée sous la forme d'un joint torique.

4. Moteur électrique selon au moins l'une des revendications précédentes,
**caractérisé en ce que**
la première partie d'accouplement (1) présente un premier évidement (21) traversant la première partie d'accouplement (1), en particulier radialement, en particulier pour le remplissage de la masse de scellement et/ou de l'adhésif dans l'espace intermédiaire (23),
en particulier dans lequel le premier évidement (21) passe, depuis l'environnement de la première partie d'accouplement (1), à travers la première partie d'accouplement (1) et débouche dans l'espace intermédiaire (23).

5. Moteur électrique selon la revendication 4,
**caractérisé en ce que**
la première partie d'accouplement (1) présente un deuxième évidement (22) traversant la première partie d'accouplement (1), en particulier radialement, en particulier pour la purge d'air lors du remplissage, lequel est espacé du premier évidement (21), en particulier dans lequel le deuxième évidement couvre dans la direction circonférentielle une zone qui est également couverte par le premier évidement (21) dans la direction circonférentielle,
en particulier dans lequel le deuxième évidement (22) passe, depuis l'environnement de la première partie d'accouplement (1), à travers la première partie d'accouplement (1) et débouche dans l'espace intermédiaire (23).

6. Moteur électrique selon au moins l'une des revendications précédentes,
**caractérisé en ce que**
la deuxième partie d'accouplement (2) présente un premier épaulement qui limite axialement la première partie annulaire (3),
et/ou que
la deuxième partie d'accouplement (2) présente un deuxième épaulement qui limite axialement la deuxième partie annulaire (26).

7. Moteur électrique selon au moins l'une des revendications précédentes, **caractérisé en ce que**
sur la zone de la deuxième partie d'accouplement (2) opposée à l'espace intermédiaire (23) et/ou aux deux parties annulaires (3, 26), vue axialement, en particulier la zone d'extrémité de la deuxième partie d'accouplement (2), une zone de la deuxième partie d'accouplement (2) est réalisée sous la forme d'un hexagone mâle (40).

8. Moteur électrique selon la revendication 7,
**caractérisé en ce que**
la première partie d'accouplement (1) présente un évidement, en particulier une paroi intérieure, réalisé de manière non circulaire, en particulier sous la forme d'un hexagone femelle,
en particulier dans lequel la zone axiale couverte par l'évidement chevauche la zone axiale couverte par l'hexagone mâle (40) de la deuxième partie d'accouplement (2).

9. Moteur électrique selon la revendication 8,
**caractérisé en ce que**
l'hexagone femelle est relié par complémentarité de forme, avec du jeu dans la direction circonférentielle, à l'hexagone mâle (40) de la deuxième partie d'accouplement (2), et/ou l'hexagone femelle est en prise avec l'hexagone mâle (40) de la deuxième partie d'accouplement (2),
dans lequel le plus grand diamètre extérieur de l'hexagone mâle (40) de la deuxième partie d'accouplement (2) est supérieur au plus petit diamètre intérieur de l'hexagone femelle.

10. Moteur électrique selon au moins l'une des revendications précédentes,
**caractérisé en ce que**
le moteur électrique présente un frein à commande électromagnétique,
dans lequel un support de garniture de frein (12) est relié à l'arbre de rotor (15) de manière solidaire en rotation mais déplaçable axialement,
dans lequel un enroulement (8), en particulier un enroulement annulaire (8), auquel peut être appliqué un courant électrique, est reçu dans un corps magnétique (10), dans lequel un disque d'induit (11), en particulier un disque d'induit ferromagnétique (11), qui est relié au corps magnétique (10) de manière solidaire en rotation mais déplaçable axialement, est disposé entre le support de garniture de frein (12) et l'enroulement (8),
dans lequel une partie ressort (9) supportée par le corps magnétique (10) presse le disque d'induit (11) vers le support de garniture de frein (12),
en particulier de sorte que, lorsque l'enroulement (8) est alimenté, le disque d'induit (11) est attiré vers l'enroulement (8) et/ou vers le corps magnétique (10) à l'encontre de la force du ressort et que, lorsque l'enroulement (8) n'est pas alimenté, le disque d'induit (11) exerce une pression sur le support de garniture de frein (12), de sorte que le support de garniture de frein (12) est pressé sur une surface de freinage disposée du côté du support de garniture de frein (12) opposé au disque d'induit (11).

11. Moteur électrique selon au moins l'une des revendications précédentes, **caractérisé en ce que**
l'accouplement est disposé entre le frein et le capteur d'angle (6).
